# EUROPEAN PATENT APPLICATION

(11) **EP 4 538 500 A1**
(43) Date of publication of application: **16.04.2025**
(21) Application number: 23306776.8
(22) Date of filing: 12.10.2023
(51) Int. Cl.: E21B 19/22, E21B 41/00, E21B 43/013, E21B 43/01, B63B 35/03, F16L 1/12

(54) **A RECOVERY METHOD TO RECOVER A FLEXIBLE LINE IN A BODY OF WATER AND RELATED INSTALLATION**

(71) Applicant: TechnipFMC Subsea France, 92400 Courbevoie (FR)
(72) Inventor: LOTEN, Felix, WELLARD, 6170 (AU); LAURENT, Guillaume, 55100 KUALA LUMPUR (MY)
(74) Representative: Lavoix

(57) **Abstract**

The method comprises :
- progressively lifting the flexible line (11) from the body of water (14) on or/and above a recovery installation (10) using a line recovery system (22);
- repeatedly processing an upper end region (26) of the flexible line (11) beyond the line recovery system (22) to divide the upper end region (26) in several line sections (12) in a processing stage (24) of the recovery installation (10);
- creating an intermediate slack region (30) of the flexible line (11) between a lifted region (108) of the flexible line (11) in the line recovery system (22) and the upper end region (26) in the processing stage (24) to compensate an instantaneous velocity difference between a velocity of the lifted region (108) and a velocity of the upper end region (26).

## Description

The present invention concerns a recovery method to recover a flexible line in a body of water, the method comprising:
- progressively lifting the flexible line from the body of water on or/and above a recovery installation using a line recovery system;
- repeatedly processing an upper end region of the flexible line beyond the line recovery system to divide the upper end region in several line sections in a processing stage of the recovery installation.

The method is carried out in particular to recover significant lengths of flexible line located in a body of water, and to process the recovered flexible line so as to divide the line in a plurality of short line sections.

The flexible line is for example a flexible pipe, an umbilical, a flying lead, a power cable or a communication cable.

The line sections recovered from offshore sites are then deconstructed, preferably offshore, in order to recycle the metals and plastics contained in the pipe sections.

The decommissioning of offshore fluid production sites after the termination of fluid production is currently a challenge for operators.

An offshore production or/and injection site generally comprises fluid (oil, water and gas) collection equipment located at the bottom of a body of water.

Numerous fluid injection and/or production lines extend from the fluid collection equipment to the surface, to transport fluids to be injected in the ground below the bottom of the body of water and/or to collect fluids produced from the ground.

In some instances, fluid production is carried out in shallow or mid-shallow waters with lengths of the fluid lines being less than 600 m. In some cases, the production is carried out in deep waters, in which the fluid lines have a more significant length, for example lengths more than 1000 m.

Given the number of lines required to inject or/and produce fluids in several wells, the decommissioning of the production site generally requires recovering very significant lengths of lines in particular pipes.

Recycling the materials of the line sections recovered from fluid production sites has a strong interest in order to generate revenue, in particular from the recovered metals. It is also beneficial for the environment, as the amount of non-reused waste is minimized.

BR 10 2014 031 802.0 discloses a recovery vessel having a deck equipped with a crusher configured to directly crush a recovered pipe into small chips, and then, to separate the chips according to their nature, in order to recycle the metals and the plastics.

Such a solution is not entirely satisfactory. First, it requires a large amount of space on the recovery vessel, which limits the number and type of vessels which can be used to recover pipes offshore.

Second, the crusher on the offshore recovery vessel has to be maintained in operational conditions at any time, to be able to handle the continuous recovery of several hundred meters of pipe. Any stop of production due to the crusher being not operational results in stopping the pipe recovery and thus, adds significant costs to the recovery operation.

In an alternate method, the lines are typically recovered using a line recovery system. Such recovery systems may be positioned over a chute on the side of the vessel using a horizontal or tilted tensioner or directly into a Vertical Lay System (VLS) tensioner mounted above a vessel moonpool or overside.

A tiltable or tilted line recovery system (i.e. not completely vertical and not completely horizontal) can be inclined over the side, at the middle or at the back of the vessel. Typically, said tiltable systems are actually horizontal lay systems which are slightly inclined of a few degrees, for example between 10° and 45°, in relation to the deck level of the recovery vessel.

The lines that are to be decommissioned are initially processed onboard using an offshore processing system. The processing generally comprises cutting the upper end region or upstream region of the recovered line into shorter lengths to allow efficient packaging and transportation.

The upper end region or upstream region corresponds to the extremity portion of the recovered line reaching first the water surface or, after the line having been divided into shorter lengths, corresponding to the extremity portion of the line notched by the cutting system

The processing operation consists of lifting a set length of line onto the deck by activating tensioners on the VLS, then stopping the tensioners of the VLS to immobilize the set length of line.

The recovered lengths of line are then cut and moved clear. Recovery of the next length of line is then carried out.

This method is not entirely satisfactory. Stopping the tensioners has to be implemented every 30 to 40 m of line. This strongly affects the productivity of the recovery vessel and thus, increases the operation costs.

Moreover, the tensioners of the recovery system have to be stopped very often, sometimes every 5 or 10 minutes. However, these tensioners are hydraulically operated and stabilization of the hydraulic system after restarting the tensioners may take approximately the same time.

In addition, tensioners are designed to operate in a continuous manner and stopping them frequently may cause failures and maintenance issues.

One aim of the invention is thus to obtain a recovery method which can be operated to decommission significant lengths of lines in a very productive and reliable manner to be later on unloaded onshore and be subjected to physical and/or mechanical treatments in order to be recycled.

To this aim, the subject matter of the invention is a recovery method of the above-mentioned type, characterized by:
- creating an intermediate slack region of the flexible line between a lifted region of the flexible line in the line recovery system and the upper end region in the processing stage to compensate an instantaneous velocity difference between a velocity of the lifted region and a velocity of the upper end region.

The recovery method according to the invention may comprise one or more of the following feature(s), taken solely, or according to any technical feasible combination:
- progressively lifting the line comprises at least a phase of continuously moving the lifted region of the flexible line in the line recovery system, the processing of the upper end region of the flexible line comprising, during the at least a phase of continuously moving the lifted region in the line recovery system, immobilizing the upper end region of the flexible line to divide the upper end region in the several line sections in the processing stage of the recovery installation, the length of the intermediate slack region increasing while the upper end region is immobilized;
- during the at least a phase of continuously moving the lifted region of the flexible line in the line recovery system, after the division of the upper end region in the several line sections, the upper end region is moved again at a velocity greater than the velocity of the lifted region to decrease the length of the intermediate slack region;
- the length of the intermediate slack region is maintained between 6 meters and 15 meters;
- the intermediate slack region has a J shape with a lower point;
- the recovery installation comprises a deck from which the line recovery system protrudes, the lower point of the intermediate slack region remaining above the deck without contact with the deck;
- the processing stage protrudes above the deck, the flexible line having a feeding region between the intermediate slack region and the upper end region, the feeding region descending to the processing stage;
- the recovery installation comprises an intermediate supporting post protruding above the deck, the intermediate supporting post having a supporting guide, the intermediate slack region extending between the line recovery system and the supporting guide, the supporting guide having a maximal height below a height of an outlet of the line recovery system and above a height of an inlet of the processing stage;
- the recovery installation comprises a vertical scale, advantageously located on the intermediate supporting post, to measure a height of the lower point, a velocity of the upper end region being controlled as a function of the height of the lower point measured on the vertical scale;
- the processing stage comprises at least one cutting system, each processing of the upper end region of the flexible line comprising placing at least part of the upper end region facing the at least one cutting system and transversely dividing the upper end region to create at least one line section;
- the processing stage comprises at least two cutting systems, each processing of the upper end region of the flexible line comprising placing at least part of the upper end region facing the at least two cutting systems and transversely dividing the upper end region to simultaneously create at least two line sections;
- the recovery method comprises moving a first line section of the at least two line sections in a first line section receptacle at a first height below the at least two cutting systems and moving a second line section of the at least two line sections, adjacent to the first line section, in a second line section receptacle at a second height below the at least two cutting systems and below the first height;
- the recovery method comprises successively grasping the first line section and the second line section with a lifting system and moving the first line section and the second line section on a storage area of the recovery installation;
- the at least one line section has a length smaller than 25 m, in particular comprised between 10 m and 20 m;
- creating an intermediate slack region of the flexible line comprises controlling the velocity of the upper end region with a processing inlet tensioner at an inlet of the processing stage or/and with a line pulling system pulling a free end of the upper end region.

The invention also concerns a recovery installation to recover a flexible line in a body of water, the recovery installation comprising:
- a line recovery system to progressively lift the flexible line from the body of water on or/and above the recovery installation;
- a processing stage to repeatedly process an upper end region of the flexible line beyond the line recovery system to divide the upper end region in several line sections; characterized by:
- a controller configured to create an intermediate slack region of the flexible line between a lifted region of the flexible line in the line recovery system and the upper end region in the processing stage to compensate an instantaneous velocity difference between a velocity of the lifted region and a velocity of the upper end region.

The installation according to the invention may comprise the following feature:
- the processing stage comprises a processing inlet tensioner at an inlet of the processing stage or/and a line pulling system configured to pull a free end of the upper end region, the controller being configured to control the velocity of the upper end region with the processing inlet tensioner or/and with the line pulling system to create the intermediate slack region.

The invention will be better understood, based on the following description, given solely as an example, and made in reference to the appended drawings, in which:
- [Fig.1] Figure 1 is a schematic upper view of a recovery installation to implement a recovery method according the invention, the recovery installation including a recovery vessel, a line recovery system, and a processing stage;
- [Fig.2] Figure 2 is a perspective view of a deck of the recovery vessel illustrating, in front of the line recovery system, an intermediate supporting post and on the side, the processing stage;
- [Fig.3] Figure 3 is a side schematic view of the recovery installation during two different phases of a recovery method according to the invention;
- [Fig.4] Figure 4 is a flow chart illustrating steps of the method according to the invention.

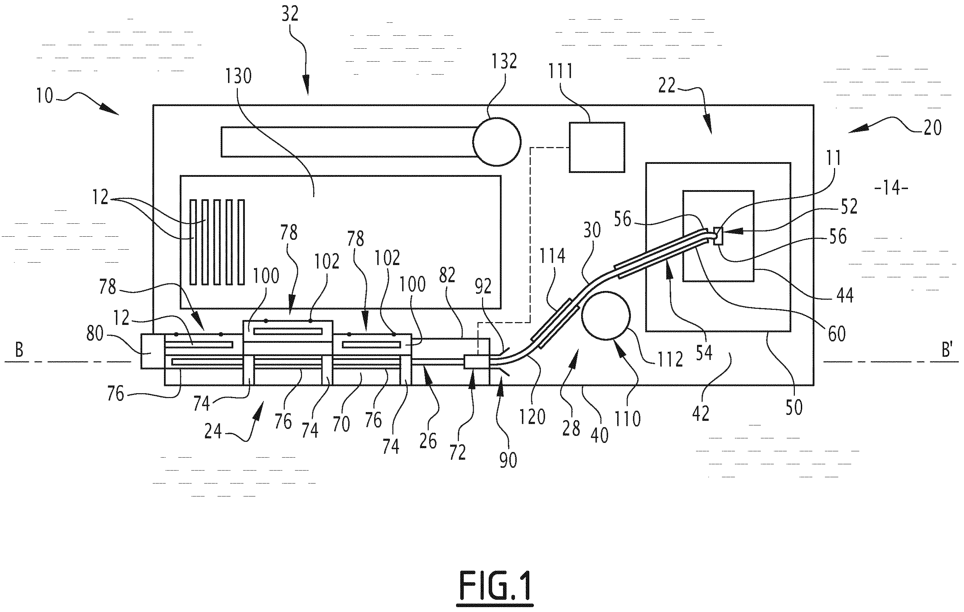

A first recovery installation 10 intended to recover a flexible line 11 and to process it in several line sections 12 by a method according to invention is shown in figures 1 to 3.

The recovery installation 10 is intended to be operated over a body of water 14 to recover the flexible line 11 in the body of water 14.

The body of water 14 is for example a sea, an ocean, a lake, and/or a river, its depth is comprised generally between 10 m and 3000 m.

In the example shown on figure 1, the line sections 12 are for example sections of flexible pipe, in particular built according with the standards API 17J (Specification for Unbonded Flexible Pipe, 4th edition - May 2014) and API RP 17B (Recommended Practice for Flexible Pipe, 5th edition - May 2014) established by the American Petroleum Institute. The flexible line 11 is advantageously an unbonded flexible pipe. At least two adjacent layers of the flexible pipe are free to move longitudinally with respect to each other during flexure of the pipe.

In the example of figure 1, each line section 12 has an axis and delimits a central passage for circulation of a fluid, advantageously a petroleum fluid. The central passage diameter advantageously ranges from 15 cm to 60 cm.

Alternatively, the line sections 12 are sections of a Hybrid Flexible Pipe (HFP), in particular built according with the standards DNV-ST-F119 (Thermoplastic Composite Pipes, Edition September 2019) established by the DNV (Det Norske Veritas). The hybrid flexible pipe is advantageously an unbonded flexible pipe. At least two adjacent layers of the hybrid flexible pipe are free to move longitudinally with respect to each other during flexure of the pipe.

Alternatively, the submarine line 11 is another type of flexible pipe, such as a Fibre Composite Pipe (FCP) also known as Reinforced Thermoplastic Pipe (RTP). The FCP is designed, manufactured and qualified according with the standard API SPEC 15S (Spoolable Reinforced Plastic Line Pipe , 3rd Edition - April 2022) established by the American Petroleum Institute.

Alternatively, the line sections 12 are produced from another type of flexible pipe, such as a bonded flexible pipe. The bonded flexible pipe is designed, manufactured and used according with the standards API RP 17B (Recommended Practice for Flexible Pipe, 5th edition - March 2014), API 7K (Drilling and Well Servicing Equipment, 6th edition - December 2015), API 16C (Choke and Kill Equipment, 3rd edition - March 2021) and API 17K (Specification for Bonded Flexible Pipe, 3rd edition - August 2017) established by the American Petroleum Institute.

Again alternatively, the line sections 12 are produced from an umbilical, as defined in ISO 13628-5 "Petroleum and natural gas industries - Design and operation of subsea production systems - Part 5: Subsea umbilicals" published in December 2009 by the International Organization for Standardization, API 17E "Specification for Subsea Umbilicals", 5th Edition - July 2017, established by the American Petroleum Institute, and IEC60183:2015, January 2015, IEC60840:2020, May 2020 and/or IEC63026:2019, December 2019 , established by the International Electrotechnical Commission (IEC), all provide standards for the design and manufacture of umbilicals and power cables. Umbilical includes for example steel/thermoplastic/composite tube electrohydraulic umbilical, Integrated Service/Production Umbilical (ISU^{™} / IPU^{™}) and subsea power umbilical/cable.

The line sections 12 are obtained by successively transversely cutting the flexible line 11 into the line sections 12.

Each line section 12 has a length smaller than 25 m, advantageously comprised between 10 m and 20 m. Advantageously, the line sections 12 are transported from their offshore recovery site to an onshore decommissioning facility where they are deconstructed and their materials recycled. As will be described below, a decontamination of the line sections is carried out in some instances before the line sections 12 are deconstructed.

In reference to figures 1 to 3, the recovery installation 10 comprises a recovery vessel 20, a line recovery system 22 and a processing stage 24, to process an upper end region 26 of the flexible line 11 recovered with the line recovery system 22 into several line sections 12. The line recovery system 22 and the processing stage 24 are here carried by the recovery vessel 20

According to the invention, the recovery installation 10 comprises an intermediate stage 28 between the line recovery system 22 and the processing stage 24 to create an intermediate slack region 30 of the flexible line 11 and to control the length of the slack region 30.

The recovery installation 10 further comprises, downstream of the processing stage 24, a handling and storage stage 32 to carry and store the line sections 12 processed in the processing stage 24.

In this example, the recovery vessel 20 is a ship floating on the surface of the body of water. In variant, the recovery vessel 20 is a platform, in particular a floating platform.

The recovery vessel 20 has a hull 40, floating on the surface of the body of water 14 and at least a deck 42 onto which the line recovery system 22, the processing stage 24, the intermediate stage 28 and the storage stage 32 are positioned.

In the example of figure 1, the hull 40 has a moon pool 44 extending vertically through the deck 42 and through the hull 10 to provide a central vertical access in the body of water 14.

Alternatively, recovery operations can take place over the side or at the back of the vessel 20.

The line recovery system 22 is configured to vertically or horizontally lift the line above the surface of the body of water 14 to bring the upper end region 26 of the flexible line 11 above the deck 42 to the processing stage 24.

In the example of figure 1, the line recovery system 22 is a vertical lift system (VLS) configured to continuously lift a vertical section of the flexible line 11 and to redirect it above the hull 40. The vertical lifting system 22 is configured to recover the flexible line 11 in a J shape configuration.

Optionally, the line recovery system 22 may be tiltable (i.e. not completely vertical and not completely horizontal) above the surface of the body of water 14. The recovery system being inclined over the side, at the middle or at the back of the vessel 20. Typically, tiltable systems are vertical or horizontal lay systems which are slightly inclined of a few degrees, for example between 10° and 45°, in relation to the deck 42 level of the recovery vessel 20.

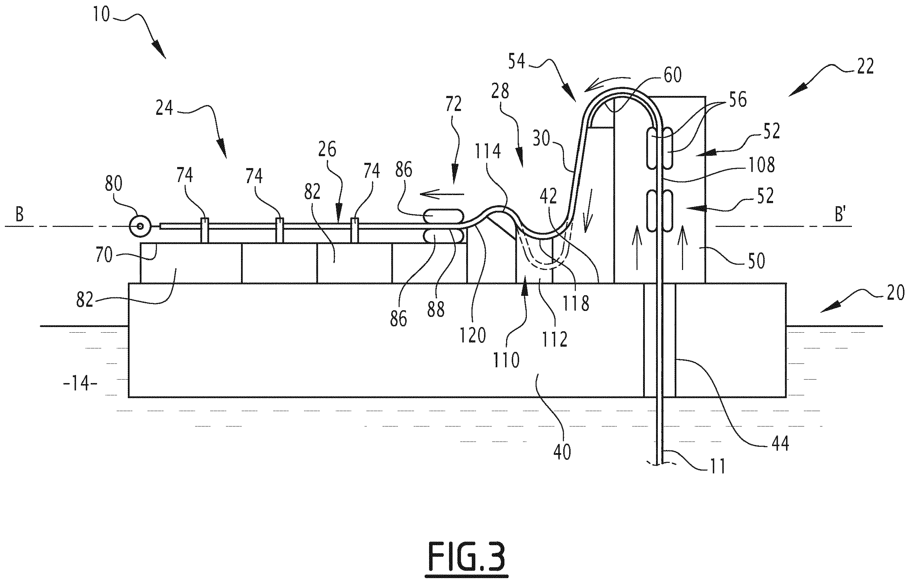

In reference to figure 3, the vertical lifting system 22 comprises a tower 50 mounted on the deck 42, and tensioners 52 carried by the tower 50 to continuously lift the flexible line 11. The line recovery system 22 further comprises a redirecting mechanism 54 to bend the flexible line 11 at the top of the tower 50 and redirect it towards the deck 42.

The tower 50 is here mounted above the moon pool 44. When the recovery vessel 20 does not comprise a moon pool 44, the tower 50 is advantageously mounted near a side of the hull 40 to lift the flexible line 11 from the side.

In the example of figure 3, the height of the tower, taken above the hull 42 is for example greater than 20 m, and is generally comprised between 20 m and 40 m.

In the example of figure 3, the line recovery system 22 comprises at least two tensioners 52, located one above the other along a vertical axis. Each tensioner 52 comprises at least a pair (2-track version), preferably two pairs (e.g. 4-track version), of facing gripping members 56 delimiting between them a vertical passage. Each gripping member 56 comprises a guide track for gripping and moving the flexible line 11.

The tensioners 52 can be operated continuously at a lifting velocity which can be controlled. The line lifting velocity is for example comprised between 1.0 m/min and 30 m/min, notably between 1.5 m/min and 12.0 m/min.

The redirection mechanism 54 here comprises a curved guide chute 60 or a wheel, mounted at the top of the tower 50. The chute 60 is substantially U shaped and faces downwards. It defines a suitable bending radius for the flexible line 11. This bending radius is greater than the minimum bending radius (MBR) of the flexible line 11. It is configured to bend the flexible line 11 from an upper vertical trajectory to a downward trajectory directed towards the deck 42 while controlling the bending radius of the flexible line 11.

As shown in figure 1, 2 and 3, the processing stage 24 comprises a supporting platform 70 protruding from the deck 42. It is here located on a side of the hull 40. The processing stage 24 further comprises a processing inlet tensioner 72 to drive the upper end region 26 of the flexible line 11 on the platform 70.

The processing stage 24 also comprises several cutting systems 74 positioned transversely in reference to an axis B-B' of the supporting platform 70, longitudinally apart from each other along the axis B-B'.

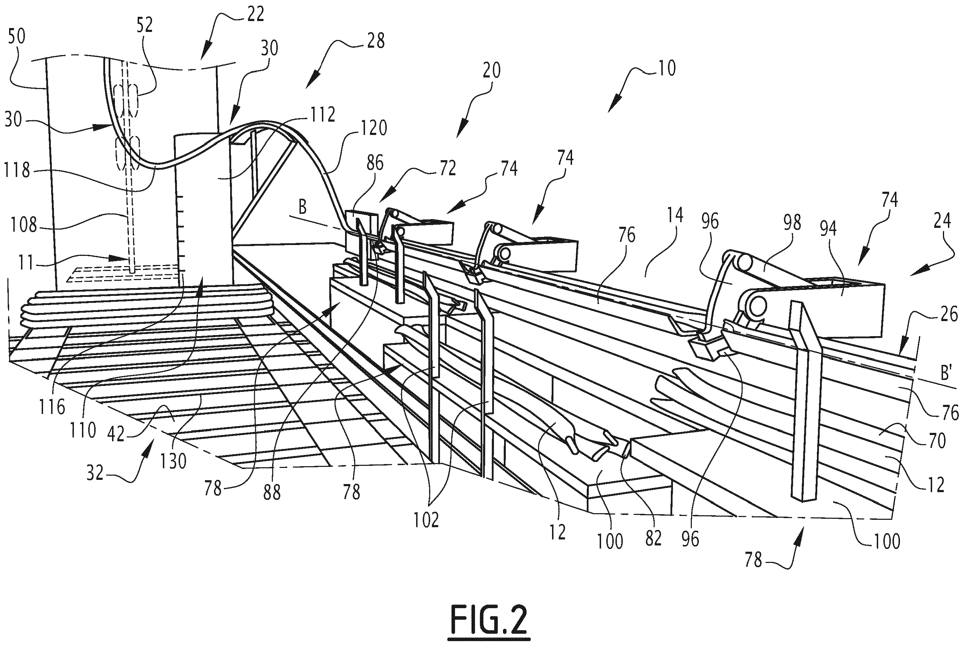

In reference to figure 2, the processing stage 24 further comprises a plurality of tilting receiving gutters 76 positioned between the cutting systems 74 to hold the line sections 12 created by the cutting systems 74 and a plurality of receptacles 78, located below the tilting gutters 76 to temporarily store the line sections 12 recovered in the tilting gutters 76.

The processing stage 24 further comprises a line pulling system 80 located at an end of the supporting platform 70 opposed to the processing inlet tensioner 72.

The supporting platform 70 is here located at a height which is intermediate between the height of the deck 42, and the height of the tower 50. The height of the supporting platform 70 is for example between 3 m and 6 m above the height of the deck 42.

In the example shown on figure 3, the supporting platform 70 is advantageously mounted on several storage containers 82, which are carried on the deck 42. This allows storage of equipment necessary to the processing stage 24, such as spare parts, maintenance and repair tools or/and potentially, line sections 12.

The processing inlet tensioner 72 is mounted at one end of the supporting platform 70 located closer to the line recovery system 22.

It comprises at least a pair of facing gripping members 86, delimiting among them, a horizontal line insertion passage 88. The gripping members 86 are each made of a guide track for gripping and moving the flexible line 11 in the passage 88.

In a variant (not shown), the inlet tensioner 72 comprises two pairs of facing gripping members 86.

Preferentially, the processing inlet tensioner 72 is equipped, at its inlet with a converging guide 90 to guide the flexible line 11 in the line insertion passage 88. The converging guide for example has two lateral converging walls 92.

As shown in figure 2, the distance separating each pair of adjacent cutting systems 74 along axis B-B' on the supporting platform 70 corresponds to the length of a line section 12.

The processing stage 24 preferentially comprises at least two cutting systems 74, more preferentially at least three cutting systems 74 spread along the length of the platform 70.

In the example of figure 2, each cutting system 74 is a line cutter, configured to transversely cut the flexible line 11 substantially perpendicularly to its axis.

The line cutter comprises a base 94, and jaws 96, carried by the base 94. At least one jaw 96 is movable between a line admission open configuration, in which the jaws 96 are apart from each other, and a cutting closed configuration, in which the jaws 96 have been brought closer together, in particular in contact with one another, to cut the upper end region 26 of the flexible line 11. Advantageously, at least one jaw 96 is hinged on the base 94 and is powered by a jack 98 to move from the open configuration to the cutting closed configuration.

Alternatively, the line cutter is for example a blade, a shear cutter, a diamond cutter/saw or a wire saw, or a high pressure water jet.

Each tilting gutter 76 is located between two adjacent cutting systems 74 along the axis B-B'. Each tilting gutter 76 is rotatable around an axis parallel or coaxial with the axis B-B' between a reception position, in which the gutter 76 faces upwards to support the line section 12, and a laterally and/or downwardly tilted position facing a receptacle 78, in which the line section 12 is distributed to the receptacle 78 by the effect of gravity.

In the example of figure 2, the number of tilting gutters 76 corresponds to the number of cutting systems 74.

Each receptacle 78 is associated to a tilting gutter 76. It is located below the tilting gutter 76 and laterally apart from the tilting gutter 76 in view of axis B-B'.

Each receptacle 78 comprises a bottom receiving surface 100, to receive a plurality of line sections 12 distributed from a corresponding tilting gutter 76, and at least a back retaining member 102, located on a lateral side of the bottom receiving surface 100 opposed to the tilting gutter 76 to block the movement of the line section 12 and avoid its fall from the bottom receiving surface 100 to the deck 42 of the vessel 20.

In the example of figures 1 and 2, at least a first receptacle 78 has a bottom receiving surface located at a first height below the height of adjacent bottom receiving surfaces 100 of adjacent receptacles 78. Moreover, the bottom receiving surface 100 of the first receptacle 78 is located further apart laterally from the axis B-B' than the adjacent receptacles 78.

This configuration of the receptacles 78 avoids any interference between the line sections 12 arising from adjacent gutters 76, since the line sections 12 from adjacent gutters 76 are distributed at different heights on different bottom receiving surfaces 100. It also creates an easy access for transfer of line sections 12 from the receptacles 78 to the deck 42.

The line pulling system 80 for example comprises a winch, located at an end of the supporting platform 70 opposed to the processing inlet tensioner 72, in alignment with the axis B-B'. The line pulling system 80 is configured to pull a free end of the upper end region 26 of the flexible line 11 apart to apply a tension on the upper end region 26 when it is received in the successive tilting gutters 76. That way, potential warping of the flexible line 11 is avoided and it this thus possible to obtain a clear cut of the flexible line 11 into line sections 12.

The intermediate stage 28 is located between the line recovery system 22 and the processing stage 24. It is configured to create and control the length of an intermediate slack region 30 of the flexible line 11 between the lifted region 108 of the flexible line 11 and the upper end region 26.

The intermediate stage 28 comprises in this example a supporting post 110, and a controller 111 (see figure 1), to control the velocity of the tensioner 72 to adjust the length of the intermediate slack region 30.

As shown in figures 1 to 3, the supporting post 110 comprises a column 112 protruding from the deck 42, and a supporting gutter 114 borne by the column 112. It further comprises a vertical scale 116, to provide an information on the length of the intermediate slack region 30.

The supporting gutter 114 protrudes away from the column 112 towards the processing stage 24. It has an inverted U shape.

The maximal height of the supporting gutter 114 is below the minimal height of the redirection mechanism 54, and is above the height of line insertion passage 88 of the processing inlet tensioner 72. For example, the maximal height of the supporting gutter 114 is between 5 m and 15 m, preferably between 6 m and 12 m, and preferably between 8 m and 10 m above the deck.

The flexible line 11 lays on the supporting gutter 114. The intermediate slack region 30 is thus formed between the outlet of the redirection mechanism 54, and the inlet of the supporting gutter 114.

The intermediate slack region 30 has generally a J shape and a variable length which can be controlled by the controller 111 by adjusting the relative velocities of the tensioners 52, 72. The length of the intermediate slack region 30 is for example maintained between 6 meters and 15 meters.

The intermediate slack region 30 has a lower point 118, which is located below the supporting gutter 114 at a height depending on the length of the intermediate slack region 30.

A feeding region 120 of the flexible line 11 is also defined between the outlet of the supporting gutter 114 and the inlet of the processing inlet tensioner 72. The feeding region 120 has a general lazy S shape descending towards the processing stage 24.

The vertical scale 116 is defined by markings on the supporting column 112. An operator or a sensor is configured to evaluate the accumulated length of the intermediate slack region 30 by assessing the position of the lower point 118 on the vertical scale 116.

In the intermediate slack region 30, no tension resulting from the tensioners 52, 72 applies on the flexible line 11. The intermediate slack region 30 only bears its own weight, under the effect of gravity. It merely dangles above the deck 42, preferably at a non-nil height from the deck 42.

The controller 111 is manually or automatically operated. It is configured to adjust the relative velocity of the tensioner 72 with regards to the tensioners 52 of the line recovery system 22. Generally, the tensioners 52 of the line recovery system 22 are controlled at a constant velocity by a controller specific to the line recovery system 22. The controller 111 is configured to modify the velocity of the processing inlet tensioner 72 to increase and/or decrease the length of the intermediate slack region 30.

In particular, the controller 111 is configured to be operated to stop the processing inlet tensioner 72 during each processing step in which the upper end region of the flexible line 11 is received and cut into the processing stage 24 by the cutting systems 74. When the processing inlet tensioner 72 is stopped, the length of the intermediate slack region 30 increases and the lower point 118 lowers towards the deck 42.

On the contrary, the controller 111 is configured to increase the velocity of the processing inlet tensioner 72 after each processing step has taken place, to feed a new upper end region 26 in the processing stage 24 and to decrease again the length of the intermediate slack region 30.

In such phases, the processing inlet tensioner 72 velocity can be controlled by the controller 111 to be at least 10%, in particular between 20 % et 50 % of the velocity of the tensioners 52 of the line recovery system 22.

The processing inlet tensioner 72 velocity is then advantageously comprised between 1 m/min and 30 m/min, preferably between 1 m/min and 20 m/min, preferably between 1,5 m/min and 12 m/min.

The handling and storage stage 32 comprises a storage area 130 of the deck 42, located below and adjacent to the receptacles 78, and at least a crane 132, to carry the line sections 12 from each receptacle 78 to the storage area 130.

In the example of figure 2, the line sections 12 are stored in the storage area 130 with an alignment transverse to the axis in which they are stored in the receptacles 78.

The crane 132 is equipped with a deployable lifting crane wire with at least a sling mounted at its free end. The or each sling 54 is configured to be tied around several line sections 12 stored in the same receptacle 78 to jointly lift all the tied line sections 12 from the receptacle 78 and drop them into the storage area 130 with the adequate orientation.

A recovery method according to the invention will be now described.

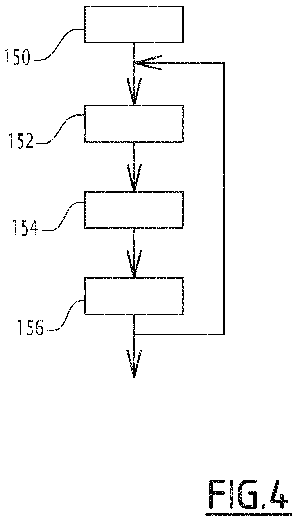

Initially, at step 150 (see figure 4), a flexible line 11 is progressively lifted from the body of water 14 in the line recovery system 22.

The lifting is continuous, generally at a constant velocity advantageously comprised between 1 m/min and 30 m/min, except when a specific equipment located on the flexible line 11 needs to pass through the line recovery system 22.

A vertical lifted region 108 of the flexible line 11 is received between the gripping members 56 of the tensioners 52. It then runs through the redirection mechanism 54 to adopt a curved configuration in the curve guide chute 60.

At the outlet of the redirection mechanism 54, the flexible line 11 defines a J shape intermediate slack region 30 which extends to the supporting gutter 114 of the supporting post 110 and is then brought to the processing inlet tensioner 72.

Then, the following steps are repeated. The upper end region 26 of the flexible line is fed into the processing stage 24 at step 152. The processing inlet tensioner 72 pushes the upper end region 26 of the flexible line 11 towards the line pulling system 80 along the axis B-B' and/or the line pulling system 80 pulls and tensions the upper end region 26.

The upper end region 26 is thus positioned in the successive tilting gutters 76 along axis B-B'.

When the free end of the upper end section 26 has reached beyond the cutting systems 74, the processing inlet tensioner 72 is stopped.

A stage 154, the upper end region 26 of the flexible line 11 is thus immobilized facing the cutting systems 74 to allow the processing into several line sections 12.

Since the tensioners 52 of the line recovery system 22 still operate at a constant velocity, the length of the intermediate slack region 30 increases.

An operator or an automatic system is able to monitor and assess the increase of the length by observing the vertical position of the lower point 118 on the vertical scale 116. The lower point 118 of the intermediate slack region 30 preferably remains above and apart from the deck 42 to avoid any interference on the deck 42 and possible displacement disturbance for the operators walking on the deck 42.

At step 156, the cutting systems 74 are activated. The jaws 96 of the cutting system 74 are moved to their cutting position by the jack 98.

The upper end region 26 received in the processing stage 24 is divided in at least two lines sections 12, preferably in three adjacent line sections 12.

Each line section12 is then received in a tilting gutter 76 occupying its reception position. The tilting gutters 76 are then tilted to their tilted positions. The line sections 12 roll to a respective receptacle 78, in which they are received on the bottom receiving surface 100 and blocked by the back retaining members 102.

Once the processing is finished, the processing inlet tensioner 72 is reactivated. The controller 111 is operated manually or automatically, to control the velocity of the processing inlet controller 72 to reduce again the length of the intermediate slack region 30. The velocity of the processing inlet tensioner 72 is then greater than the velocity of the vertical lifted region 108 of the line 11 in the tensioners 52 of the line recovery system.

The relative velocity between the tensioners 52, 72 is preferably adjusted based on the length of the intermediate slack region 30 evaluated with the vertical scale 116.

Steps 152 to 156 are then repeated. A new upper end region 26 is fed into the processing stage 24 as described before, and is processed.

Thanks to the provision of an intermediate slack region 30 and thanks to the control of its length between the outlet of the line recovery system 22 and the inlet of the processing stage 24, an intermittent operation of the processing inlet tensioner 72 is possible, while the lifting tensioners 52 continuously operate.

This allows the immobilization of the upper end region 26 of the flexible line 11 to divide it in several line sections 12 using the cutting systems 74.

The method according to the invention thus surprisingly allows on the one hand, a continuous lifting of the flexible line 11 in the line recovery system 22, and on the other hand, a discontinuous processing of the upper end region 26 of the flexible line 11 at regular intervals.

The length of the intermediate slack region 30 is adaptably controlled to take into account variabilities in the processing step.

In particular, the length of the intermediate slack region 30 can increase to a larger extent when the processing step takes a longer time. Then, the velocity of the flexible line 11 in the processing inlet tensioner 72 is controlled such that, after the processing has been carried out, the increase in length while the processing inlet tensioner 72 was stopped is compensated by a higher velocity of the processing inlet tensioner 72, as described above.

The velocity of the processing inlet tensioner 72 is easily controllable by checking the position of the lower point 118 of the intermediate slack region 30 on a vertical scale 116 defined for example on the column 112 onto which the supporting gutters 114 is attached.

The recovery method according to the invention is therefore very efficient, because the line recovery system 22 continuously operates, even during the successive processing steps in the processing stage 24. The reliability of the lifting tensioners 52 is also improved, as they operate almost continuously.

Furthermore, the layout of the processing stage 24 with tilting gutters 76 and shifted receptacles 78 provides a very efficient distribution of the line sections 12 which have been obtained. The lines sections 12 are then easily evacuated by the crane 132 of the handling and storage stage 32.

In a variant, a decontamination step is carried out prior to recycling. The need for a decontamination depends on the nature or/and content of the fluid which has been conveyed in the flexible line. In some instances, contaminants (classified as "NORM" i.e. Naturally Occurring Radioactive Materials) are able to migrate from the bore through the layers of the flexible line. Some other will remain in the bore.

This may represent a risk to the crew onboard the recovery vessel. The efficiency of the recovery method according to the invention reduces the duration of offshore operations and consequently minimizes the exposure to NORM for the crew.

## Claims

1. A recovery method to recover a flexible line (11) in a body of water (14), the method comprising:
- progressively lifting the flexible line (11) from the body of water (14) on or/and above a recovery installation (10) using a line recovery system (22);
- repeatedly processing an upper end region (26) of the flexible line (11) beyond the line recovery system (22) to divide the upper end region (26) in several line sections (12) in a processing stage (24) of the recovery installation (10); **characterized by**:
- creating an intermediate slack region (30) of the flexible line (11) between a lifted region (108) of the flexible line (11) in the line recovery system (22) and the upper end region (26) in the processing stage (24) to compensate an instantaneous velocity difference between a velocity of the lifted region (108) and a velocity of the upper end region (26).

2. The recovery method according to claim 1, wherein progressively lifting the line comprises at least a phase of continuously moving the lifted region (108) of the flexible line (11) in the line recovery system (22), the processing of the upper end region (26) of the flexible line comprising, during the at least a phase of continuously moving the lifted region (108) in the line recovery system (22), immobilizing the upper end region (26) of the flexible line (11) to divide the upper end region (26) in the several line sections (12) in the processing stage (24) of the recovery installation (10), the length of the intermediate slack region (30) increasing while the upper end region (26) is immobilized.

3. The recovery method according to claim 2, wherein during the at least a phase of continuously moving the lifted region (108) of the flexible line (11) in the line recovery system (22), after the division of the upper end region (26) in the several line sections (12), the upper end region (26) is moved again at a velocity greater than the velocity of the lifted region (108) to decrease the length of the intermediate slack region (30).

4. The recovery method according to any one of the preceding claims, wherein the length of the intermediate slack region (30) is maintained between 6 meters and 15 meters.

5. The recovery method according to any one of the preceding claims, wherein the intermediate slack region (30) has a J shape with a lower point (118).

6. The recovery method according to claim 5, wherein the recovery installation (10) comprises a deck (42) from which the line recovery system (22) protrudes, the lower point (118) of the intermediate slack region (30) remaining above the deck (42) without contact with the deck (42).

7. The recovery method according to claim 6, wherein the processing stage (24) protrudes above the deck (42), the flexible line (11) having a feeding region (120) between the intermediate slack region (30) and the upper end region (26), the feeding region (120) descending to the processing stage (24).

8. The recovery method according to claim 7, wherein the recovery installation (10) comprises an intermediate supporting post (110) protruding above the deck (42), the intermediate supporting post (110) having a supporting guide (114), the intermediate slack region (30) extending between the line recovery system (22) and the supporting guide (114), the supporting guide (114) having a maximal height below a height of an outlet of the line recovery system (22) and above a height of an inlet of the processing stage (24).

9. The recovery method according to any one of claims 5 to 8, wherein the recovery installation (10) comprises a vertical scale (116), advantageously located on the intermediate supporting post (110), to measure a height of the lower point (118), a velocity of the upper end region (26) being controlled as a function of the height of the lower point (118) measured on the vertical scale (116).

10. The recovery method according to any one of the preceding claims, wherein the processing stage (24) comprises at least one cutting system (74), each processing of the upper end region (26) of the flexible line (11) comprising placing at least part of the upper end region (26) facing the at least one cutting system (74) and transversely dividing the upper end region (26) to create at least one line section (12).

11. The recovery method according to claim 10, wherein the processing stage (24) comprises at least two cutting systems (74), each processing of the upper end region (26) of the flexible line (12) comprising placing at least part of the upper end region (26) facing the at least two cutting systems (74) and transversely dividing the upper end region (26) to simultaneously create at least two line sections (12).

12. The recovery method according to claim 11, comprising moving a first line section (12) of the at least two line sections (12) in a first line section receptacle (78) at a first height below the at least two cutting systems (74) and moving a second line section (12) of the at least two line sections (12), adjacent to the first line section (12), in a second line section receptacle (78) at a second height below the at least two cutting systems (74) and below the first height.

13. The recovery method according to claim 12, comprising successively grasping the first line section (12) and the second line section (12) with a lifting system and moving the first line section (12) and the second line section (12) on a storage area (130) of the recovery installation (10).

14. The recovery method according to any one of claims 10 to 13, wherein the at least one line section (12) has a length smaller than 25 m, in particular comprised between 10 m and 20 m.

15. The recovery method according to any one of the preceding claims, wherein creating an intermediate slack region (30) of the flexible line (11) comprises controlling the velocity of the upper end region (26) with a processing inlet tensioner (72) at an inlet of the processing stage (24) or/and with a line pulling system (80) pulling a free end of the upper end region (26).

16. A recovery installation (10) to recover a flexible line (11) in a body of water (14), the recovery installation comprising:
- a line recovery system (22) to progressively lift the flexible line (11) from the body of water (14) on or/and above the recovery installation (10);
- a processing stage (24) to repeatedly process an upper end region (26) of the flexible line (11) beyond the line recovery system (22) to divide the upper end region (26) in several line sections (12); **characterized by**:
- a controller (111) configured to create an intermediate slack region (30) of the flexible line between a lifted region (108) of the flexible line (11) in the line recovery system (22) and the upper end region (26) in the processing stage (24) to compensate an instantaneous velocity difference between a velocity of the lifted region (108) and a velocity of the upper end region (26).

17. The installation according to claim 16, wherein the processing stage (24) comprises a processing inlet tensioner (72) at an inlet of the processing stage (24) or/and a line pulling system (80) configured to pull a free end of the upper end region (26), the controller (111) being configured to control the velocity of the upper end region (26) with the processing inlet tensioner (72) or/and with the line pulling system (80) to create the intermediate slack region (30).
